# EUROPEAN PATENT SPECIFICATION

(11) **EP 1 205 861 B1**
(45) Date of publication and mention of the grant of the patent: **03.10.2007**
(21) Application number: 00830735.7
(22) Date of filing: 07.11.2000
(51) Int. Cl.: G06F 17/50

(54) **A process and system for estimating the power consumption of digital circuits and a computer program product therefor**
Verfahren und System zur Schätzung des Leistungsverbrauchs von digitalen Schaltungen und zugehöriges Rechnerprogrammprodukt
Procédé et système pour l'estimation de la consommation d'énergie de circuits digitaux et produit logiciel correspondant

(43) Date of publication of application: 15.05.2002
(73) Proprietor: STMicroelectronics S.r.l., 20041 Agrate Brianza (Milano) (IT)
(72) Inventor: Battù, Luca, 23878 Verderio Superiore (Lecco) (IT); Chinosi, Mauro, 20041 Agrate Brianza (Milano) (IT); Sforza, Francesco, 20122 Milano (IT); Brunelli, Marco, 23807 Novate di Merate (Lecco) (IT); Castelnuovo, Andrea, 23876 Paderno d'Adda (Lecco) (IT)
(74) Representative: Bosotti, Luciano

(56) References cited:
- GB-A- 2 318 664
- US-A- 5 535 370

## Description

### Field of the invention

The present invention relates to the estimation of power consumption of digital circuits, in particular circuits described at the register-transfer level (RTL) or at the gate level.

### Description of prior art

Estimation of power consumption of circuits described at the register-transfer level or at the gate level usually envisages software simulation of the design in different contexts. This simulation is extremely burdensome in terms of execution time, and moreover must be repeated as many times as possible in order to obtain significant estimates.

For a general review on the subject, useful reference may be made to the texts Synopsys "Power Products References Manual" - V2000.5 and SENTE', "Watt Watcher Tutorial", as well as to the work by Hsu, Shen, and Lin, "A Mixed-level Power Estimator for CMOS Circuits Using Pattern Compaction Techniques", Proc. of APPCAS '96.

Current-generation VLSI circuits may reach a size of a few million gates. This entails a wide use of resources for design verification.

The verification methodologies currently in use involve simulation of one or more representations of the circuit in order to verify the correctness of the latter from different standpoints, two of which are its functionality and estimation of power consumption.

The representations of the circuit may be at different levels of abstraction.

The representations at a high level of abstraction present the basic drawback deriving from their intrinsic modest detail.

The lower the level of abstraction, the more burdensome the simulation (in terms of CPU, memory, time, etc.) on account of the larger amount of information that has to be processed in order to achieve greater detail.

The RTL and gate-level descriptions already mentioned previously constitute representations that are currently more widely used. The former is at a higher level of abstraction than the latter. For the verification of a design, the starting point is normally the one in which it is necessary (or at least desirable) to carry out a functional simulation of the netlist, in particular at a gate level.

This solution leads, however, to exceeding the resources available (memory, CPU, time, etc.) in terms of capacity of the simulator, until the situation rapidly becomes unsustainable when (as ever more frequently occurs) an analysis of power consumption becomes necessary.

The reason lies in the fact that, even more than the functional verification, power consumption is strictly linked to the context in which the circuit operates.

A significant example is given by a microprocessor engaged in performing a number of different programs: the same hardware may present extremely different patterns of behaviour from the power-consumption standpoint (it will suffice to mention standby states or massive-computation states), with values that differ even by several orders of magnitude.

The only way to obtain acceptable estimates is to simulate the different operational conditions at the lowest possible level of abstraction. Of course, since the sizes of the circuits are such as not to enable simulation at the transistor level, the problem must be dealt with at the RT level or at the gate level.

Currently, the estimation of power consumption of digital circuits based on simulation techniques as exemplified e.g. by US-A-5 535 370, after which the preamble of claim 1 was patterned is organized in two steps:
- extraction of information on the switching activity of the circuit, i.e., on the number of switches between high logic states and low logic states of the outputs of the gates making up the circuit; and
- estimation of power consumption via dedicated software, starting from the above-mentioned information.

Basically, the extraction technique consists in adding (via linking) to the simulator a set of procedures (i.e., software functions), which, during simulation (at the RT level or at the gate level) access the data and possibly process them and store them in a format usable by the estimator.

This is done by means of the program-language interface (PLI) of commercially available simulators, or else by means of programs of conversion of the waveforms plotted in files containing the switching activity.

This approach, however, introduces a further burden for the simulator, in particular when working at the gate level (which is the only one able to guarantee satisfactory accuracy in absolute terms).

Consequently, even if solutions are available which are potentially able to perform simulation of circuits that may even be made up of as many as several million gates, the software simulation times required for completing this estimation often exceed the lifetimes of the design itself.

### Object and summary of the present invention

The object of the present invention is therefore to provide a solution for the estimation of power consumption of digital circuits (such as circuits described at the RT level or at the gate level) that is able to overcome the drawbacks outlined previously.

In accordance with the present invention, the above object is achieved thanks to a process having the characteristics specifically referred to in the ensuing claims.

The invention can be implemented both in the form of a process or method and in the form of a corresponding system.

The latter may be advantageously configured either in the form of a processing unit of a dedicated type (such as a processor or a microprocessor) directly associated to the emulator, or in the form of a general-purpose digital computer which, appropriately programmed, implements the above-mentioned process.

The invention consequently also relates to the corresponding computer program product, available on a medium, such as a disk or some other type of storage device and/or a product which may be downloaded from a telematic network and which, once loaded and run on a computer of the kind referred to, enables implementation of the process according to the invention.

The solution according to the invention realises automatic modifications to the design which do not alter the original functionality of the latter (even less so at the level of the terminals), but which, by means of the addition of emulated hardware, enables *in situ* monitoring of the behaviour (in practice the output) of each logic gate at each instant of time.

The data collected (in real time) are stored for possible post-processing.

In particular, the solution according to the invention does not give rise to a specific test modality, which means that the circuit does not require a particular set of stimuli or a particular configuration.

Essentially, the solution according to the invention is based on the use of hardware emulators (which enable a considerable increase in performance, even by several orders of magnitude) in which the design is mapped by modifying the library cells making up the netlists in order to acquire, during emulation, sufficient information for estimation of power consumption. The higher level of performance of the emulators moreover makes it possible to perform a large number of simulations of the same circuit in the most widely varying conditions.

In this connection, it should be noted that the emulators currently available (see, for example, "Celaro User's and Reference Manuals", Version 2.3_2, February 2000) do not envisage extraction of information on the switching activity of the circuit, that is, on the number of switches between the high logic state and low logic state of the networks making up the circuit itself.

The solution according to the invention consequently introduces a method which is alternative to the methods so far known for obtaining the information necessary for power estimation, involving the use of an emulator. The said solution makes automatic modifications to the design which are altogether transparent to the user, enabling collection (in real time) of sufficient data for making a reliable and complete estimate of power consumption.

### Brief description of the annexed drawings

The invention will now be described, purely by way of non-limiting example, with reference to the attached drawings, in which:
- Figure 1 illustrates a generic logic gate of a circuit to which the solution according to the invention can be applied; and
- Figure 2 illustrates the possible application of the solution according to the invention to the logic gate represented in Figure 1.

### Detailed description of a preferred exemplary embodiment of the invention

In what follows, the principles underlying the solution according to the invention will be illustrated in detail.

For reasons of clarity, reference will be made to simulations at the gate level, but the same concepts are applicable indifferently also to simulations at the RT level or at a higher level. Consequently, the scope of the present invention must in no way be considered limited to digital circuits described at the RT level or at the gate level.

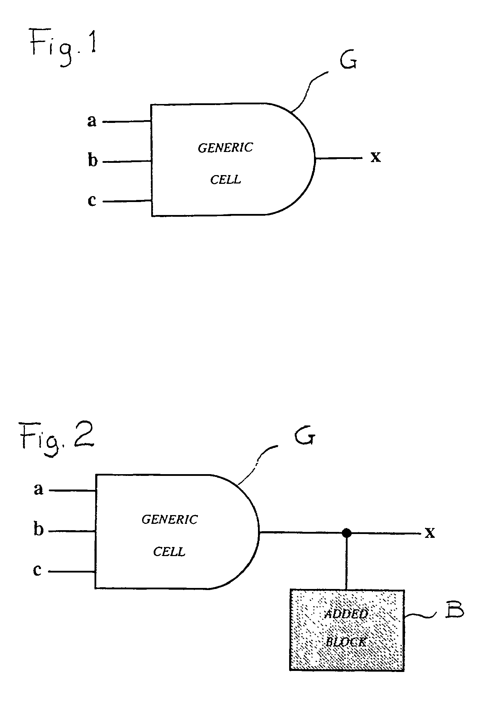

In Figure 1, the reference G designates any cell whatsoever of a digital circuit described, for example, at the gate level.

In general terms, the cell G has a certain number of inputs a, b, c (which may be any number whatsoever, from 1 to *n*).

According to the values assumed over time by the said inputs, the cell G performs a certain switching activity on its own output x.

The information required for estimating power consumption (namely, the information to be passed on to an estimator) is:
- a time interval (possibly coinciding with the entire duration of the simulation) on which the estimation is to be made;
- for each node of the netlist, the number of transitions performed during the said time interval; this value is generally referred to as *toggle count;* and
- for each node of the netlist, the fraction of time in which the state is stable (logic 1 or 0) within the interval defined previously; this value, which can be expressed as a percentage, is referred to as "static probability".

In the embodiment currently preferred, the invention is essentially based on the solution illustrated in Figure 2, and envisages associating, to each (standard) library cell making up the design, an element (RTL block or gate-level block) that is able to perform the second operation and the third operation described previously, i.e., the recording of the number of transitions performed during the estimation time interval, and the fraction of time during which the state is stable within the aforesaid interval.

In particular, the association may be made at an output pin of the cell G, as in the case of the example herein illustrated. The association may be (also or alternatively) made at other pins.

In any case, the combination formed by this new block, designated by B, together with the original cell G may be simply viewed as a new cell having the same inputs (a, b, and c) and the same outputs (x) as the previous cell, which is functionally equivalent (at the external terminals) to the original cell.

The resulting cell (original cell G + block B) can finally be included in a library to be used in the compiling phase in the same way as for the original cells. The said library is generated in semi-automatic mode only once and may be re-used for any design mapped in the same logic library.

Data acquisition may be controlled by hardware events monitored by logic analysers which are active on the emulator and which enable and disable processing of the data in the presence of particular events. This makes it possible, for example, to estimate power only in the execution of a particular portion of code performed by a microcontroller, by monitoring the Instruction Pointer Register.

The foregoing takes place according to known criteria, at present adopted in currently used emulators (see, for example, the document on emulation previously quoted or the logic analyzer disclosed e.g. in GB-A-2 318 664) ; consequently, a detailed description of the above modality is altogether superfluous herein.

Since the prerogative of emulators is that of performing the simulation at the speed allowed by the hardware, the introduction of blocks, such as the block designated by B in Figure 2, does not entail a significant burden in terms of emulation times.

The greater complexity of the new cell has an effective bearing on the capacity of the emulator, in so far as it actually reduces the maximum number of gates that can be emulated (this limitation being due to the physical capacity of the emulator itself). This, on the other hand, does not constitute too stringent a constraint in that there is no need for extracting all the items of information in one and the same simulation.

Any partitioning technique may in fact be used for selecting sets of homogeneous cells or hierarchical blocks of the design during processing.

The very high ratio (corresponding to several orders of magnitude) between the speed of an emulator and that of a typical simulator leaves wide margins for the exploitation of multiple simulations

One of the major advantages afforded by the proposed solution as compared to traditional software solutions lies in its applicability to circuits of arbitrary sizes to be simulated for a sequence of arbitrary inputs, with the achievement of considerable advantages also in terms of simplicity of implementation (cell library to be created only once) and of transparency for the end user.

During emulation, it is necessary to access the information stored in the blocks B added to the library cells. This access may be obtained by means of proprietary languages of the emulators which enable inspection of the values of the nets and registers at runtime or via the PLI.

This information can be saved and post-processed to allow reading thereof by the software that performs the *a posteriori* power estimation.

The criteria for making the aforesaid power estimation are to be considered known to the prior art (various software products implementing the said function are commercially available), and consequently do not require a detailed description herein, also because the said criteria do not constitute - in themselves - a subject of the present invention.

The solution according to the invention makes it possible to handle power estimation also in those cases which cannot handled by means of software simulation.

The said solution can be easily generalized to all transformations conceivable for a library cell by means of the addition of a hardware block that performs a certain function based upon the monitoring of the outputs (or inputs) of the original cell.

An additional hardware block, such as the block B, does not modify the functionality of the cell itself in regard to the emulated design, but enables new information to be extracted from a simulation, the only requirement being that of implementing the desired function in the hardware.

In the case in question, this is an annotated event count stored in registers which can be accessed at runtime, but various other applications of the same methodology are conceivable.

In particular, the solution according to the invention makes it possible to perform power estimation in digital circuits described at the RT level or at the gate level (but, as has been seen, also at levels other than these), providing a solution in which the transformations necessary for the design are automatic and do not affect design functionality.

The information extracted can be stored at runtime and is sufficient for power estimation performed with commercially available software products.

## Claims

1. A process for estimating power consumption, over a given time interval, of digital circuits described at the level of simulated functional elements (G) provided with input/output terminals (a, b, c; x) said estimation being based on the number of transitions performed by said simulated functional elements (G) during said given time interval, **characterized in that** it comprises the operations of:
- emulating, at the hardware level, additional elements (B) associated to said functional elements (G); said additional emulated elements (B) being able to detect, during emulation of the circuit, during said given time interval:
- the number of transitions (*toggle count*) performed by the corresponding associated functional element (G); and
- the fraction of time in which the state of the corresponding associated functional element (G) is stable, and
- acquiring the values of said number of transitions and said fraction of time, said values being indicative of the power consumption of said functional element (G) during said time interval.

2. The process according to Claim 1, **characterized in that** said additional elements (B) are emulated by associating them to an output (x) of the respective functional element (B).

3. The process according to any of the preceding claims, **characterized in that** it comprises the operation of controlling the acquisition of said at least one signal by means of hardware events monitored by logic analysers active on the emulator.

4. The process according to any of the preceding claims, **characterized in that** it comprises the operation of accessing the information stored in said additional emulated elements (B) and the operation of storing said information in view of a subsequent processing.

5. A processing system configured for the implementation of the process according to any of Claims 1 to 4.

6. A computer program product directly loadable into the internal memory of a digital computer, comprising software code portions for performing the steps of any of Claims 1 to 4 when said product is run on a computer.

## Patentansprüche

1. Verfahren zum Abschätzen von Leistungsaufnahme über ein gegebenes Zeitintervall von digitalen Schaltungen, die auf der Ebene von simulierten funktionalen Elementen (G) beschrieben werden, welche mit Eingabe-/Ausgabeanschlüssen (a, b, c; x) versehen sind, wobei die Abschätzung auf der Anzahl von Übergängen basiert, die von den simulierten funktionalen Elementen (G) während des gegebenen Zeitintervalls ausgeführt werden, **dadurch gekennzeichnet, dass** es folgende Operationen aufweist:
- Emulieren von zusätzlichen Elementen (B) auf der Hardware-Ebene, die den funktionalen Elementen (G) zugeordnet sind, wobei die zusätzlichen emulierten Elemente (B) in der Lage sind, während Emulation der Schaltung während des gegebenen Zeitintervalls Folgendes zu detektieren:
- die Anzahl von Übergängen (Umschaltzählung), die von dem entsprechenden zugeordneten funktionalen Element (G) ausgeführt werden; und
- den Zeitanteil, in dem der Zustand des entsprechenden zugeordneten funktionalen Elements (G) stabil ist, und
- Erfassen der Werte der Anzahl von Übergängen und des Zeitanteils, wobei die genannten Werte für die Leistungsaufnahme des funktionalen Elements (G) während des Zeitintervalls bezeichnend sind.

2. Verfahren nach Anspruch 1, **dadurch gekennzeichnet, dass** die zusätzlichen Elemente (B) durch Zuordnen zu einer Ausgabe (x) des entsprechenden funktionalen Elements (G) emuliert werden.

3. Verfahren nach irgendeinem der vorhergehenden Ansprüche, **dadurch gekennzeichnet, dass** es die Operation Steuern der Erfassung von mindestens einem Signal an Hand von Hardware-Ereignissen aufweist, welche von auf dem Emulator aktiven Logikanalyseeinheiten überwacht werden.

4. Verfahren nach irgendeinem der vorhergehenden Ansprüche, **dadurch gekennzeichnet, dass** es die Operation Zugreifen auf die in den zusätzlichen emulierten Elementen (B) gespeicherte Information und die Operation Speichern der Information angesichts eines nachfolgenden Verarbeitens aufweist.

5. Verarbeitungssystem, das zur Implementierung des Verfahrens nach irgendeinem der Ansprüche 1 bis 4 konfiguriert ist.

6. Computerprogrammprodukt, das direkt ladbar in den internen Speicher eines digitalen Computers ist und das Softwarecodeteile aufweist zum Ausführen der Schritte von irgendeinem der Ansprüche 1 bis 4, wenn das Produkt auf einem Computer ausgeführt wird.

## Revendications

1. Procédé pour estimer la consommation d'énergie, sur un intervalle de temps donné, de circuits numériques décrits au niveau d'éléments fonctionnels simulés (G) prévus avec des bornes d'entrée/de sortie (a, b, c ; x), ladite estimation étant basée sur le nombre de transitions exécutées par lesdits éléments fonctionnels simulés (G) pendant ledit intervalle de temps donné, **caractérisé en ce qu'**il comprend les opérations :
- d'émulation, au niveau matériel, d'éléments supplémentaires .(B) associés auxdits éléments fonctionnels (G) ; lesdits éléments émulés supplémentaires (B) étant capables de détecter, pendant l'émulation du circuit, pendant ledit intervalle de temps donné :
- le nombre de transitions (nombre de changements d'état) exécutées par l'élément fonctionnel associé correspondant (G) ; et
- la fraction de temps pendant laquelle l'état de l'élément fonctionnel associé correspondant (G) est stable, et
- d'acquisition des valeurs dudit nombre de transitions et de ladite fraction de temps, lesdites valeurs indiquant la consommation d'énergie dudit élément fonctionnel (G) pendant ledit intervalle de temps.

2. Procédé selon la revendication 1, **caractérisé en ce que** lesdits éléments supplémentaires (B) sont émulés en les associant avec une sortie (x) de l'élément fonctionnel respectif (B).

3. Procédé selon l'une quelconque des revendications précédentes, **caractérisé en ce qu'**il comprend l'opération de commande d'acquisition dudit au moins un signal au moyen d'évènements matériels contrôlés par des programmes d'analyse logique actifs sur l'émulateur.

4. Procédé selon l'une quelconque des revendications précédentes, **caractérisé en ce qu'**il comprend l'opération d'accès aux informations stockées dans lesdits éléments émulés supplémentaires (B) et l'opération de stockage desdites informations en vue d'un traitement ultérieur.

5. Système de traitement configuré pour la mise en oeuvre du procédé selon l'une quelconque des revendications 1 à 4.

6. Produit de programme informatique pouvant être chargé directement dans la mémoire interne d'un ordinateur numérique, comprenant des parties de code logiciel pour exécuter les étapes de l'une quelconque des revendications 1 à 4 quand ledit produit est exécuté sur un ordinateur.
